# EUROPEAN PATENT APPLICATION

(11) **EP 2 281 730 A1**
(43) Date of publication of application: **09.02.2011**
(21) Application number: 09758147.4
(22) Date of filing: 03.03.2009
(51) Int. Cl.: B61D 37/00, B61L 25/02, G01C 21/00, G09F 21/04

(54) **IN-TRAIN INFORMATION DELIVERY SERVICE SYSTEM, IN-TRAIN INFORMATION DELIVERY METHOD, AND INFORMATION DISPLAY UNIT FOR PASSENGER-CARRYING CAR**

(30) Priority: 03.06.2008 JP 2008145630
(71) Applicant: Mitsubishi Electric Corporation, Tokyo 100-8310 (JP)
(72) Inventor: NAGAI, Norie, Tokyo 100-8310 (JP)
(74) Representative: Zech, Stefan Markus
(86) International application number: PCT/JP2009/053983
(87) International publication number: WO 2009/147880

(57) **Abstract**

The purpose of the present invention is to provide an on-train information service system and a passenger train-use information displaying device, with which both a landscape viewing effect and an information delivering effect can be achieved and landscape-related information can be presented at the most suitable timing, and the on-train information service system that is applied to a passenger train and presents image information is equipped with: a passenger train-use information displaying device (18) that uses as a display area part of a window pane of the passenger train or a peripheral area of the window pane; and a display information processing unit (4) that outputs, in correspondence with a landscape that is viewed through the window pane, display information related to the landscape.

## Description

### TECHNICAL FIELD

The present invention relates to an on-train information service system, an on-train information presenting method, and a passenger train-use information displaying device.

### BACKGROUND ART

Information services offering still images and video images by installing displaying devices on a train have been developed as a means for delivering advertisements, along-the-railway information, news, information such as train operation status, to passengers. With the conventional information services, a displaying device is arranged on the back surface of a seat in front or above the doorway of a train car, or hung from the car ceiling. In an in-vehicle information displaying device described in Patent Document 1, a transmissive liquid crystal display panel is installed entirely over a window pane. With this technology, a displaying device can be placed on a wall surface that is conventionally occupied by windows. Thus, displayed information can be viewed regardless of the orientation of a seat, and a larger displaying device can be arranged.

Patent Document 1: Japanese Patent Application Laid-open No. 5-58287, FIG. 1

### DISCLOSURE OF INVENTION

### PROBLEM TO BE SOLVED BY THE INVENTION

In the in-vehicle information displaying device of Patent Document 1, however, because the entire window pane is used as a displaying device, there is a problem that passengers cannot enjoy outside views when information is being displayed on the displaying device.

Furthermore, conventionally, as an advertisement on a passenger train, contents of information that have been determined under contract with an advertising agency are broadcast or posted during a contracted time slot. However, because the presented character information or still image/video information have no relation to the sight through the window, it is difficult to attract interest from passengers enjoying the sight out of the window. In addition, when along-the-railway information and information such as operation status is presented between pieces of advertisement information, passengers need to concentrate on the displaying device to obtain necessary information, which prevents them from comfortably enjoying the outside view until they find the necessary information.

The present invention has been conceived in light of the above. The purpose is to achieve an on-train information service system, an on-train information presenting method, and a passenger train-use information displaying device, with which landscape-related information can be presented at a suitable timing so that both landscape viewing effect and information delivering effect can be produced.

### MEANS FOR SOLVING PROBLEM

In order to solve the aforementioned problems, an on-train information service system that is applied to a passenger train and presents image information according to one aspect of the present invention is configured in such a manner as to include: a passenger train-use information displaying device that uses as a display area part of a window pane of the passenger train or a peripheral area of the window pane; and a display information processing unit that outputs, in correspondence with a landscape that is viewed through the window pane, display information related to the landscape.

### EFFECT OF THE INVENTION

According to an on-train information service system of the present invention, a part of a window pane facing seats of a passenger train is used as a display area, and a screen is displayed in correspondence with landscape that is viewed through the window pane. Thus, the effects of both viewing landscape and delivering information can be produced.

### BRIEF DESCRIPTION OF DRAWINGS

[FIG. 1] FIG. 1 is a diagram for showing an example structure of an on-train information service system according to the present invention.
[FIG. 2] FIG. 2 is a diagram for showing an example structure of advertisement transmission information.
[FIG. 3] FIG. 3 is a diagram for showing an example structure of landscape explanation/guidance transmission information.
[FIG. 4] FIG. 4 is a block diagram for showing an example structure of an information service system according to the first embodiment.
[FIG. 5] FIG. 5 is a diagram for showing an example of a window pane applied to a display.
[FIG. 6] FIG. 6 is a timing chart for explaining timings of switching advertisement video pictures and landscape explanation/guide images.
[FIG. 7] FIG. 7 is a diagram for showing an example in which a shade arranged over the window pane is applied to a display.
[FIG. 8] FIG. 8 is a block diagram for showing an example structure of an information service system according to the third embodiment.

### EXPLANATIONS OF LETTERS OR NUMERALS

- 1: On-train information service system
- 2, 8: Information service system
- 3: External creating device
- 4, 9: Display information processing unit
- 5: Window pane
- 6: Display area
- 7: Shade
- 10, 11: Advertisement video storing/reproducing unit
- 12, 13: Landscape explanation and guidance image storing/reproducing unit
- 14: Train car information observing device
- 16a, 16b, 17a, 17b: Video/still image output processing units
- 18, 18a, 18b: Passenger train-use information displaying device (display)
- 19: Operation control platform
- 20: Mountain/ocean side identification signal generating unit
- 22: Display controlling unit
- 42: Advertisement transmission information
- 44: Landscape explanation and guidance transmission information
- 50: Interrupt signal
- 52: Train actual location information
- 54: Advertisement video information
- 56, 57: Landscape explanation and guidance image information
- 58: Display information
- 60: First car identification signal
- 62: Mountain/ocean side identification signal
- 64,: 65 Display switching signal
- 66: Display control signal
- 70: Advertisement video folder
- 71: Display order information
- 72: Landscape explanation and guidance image folder
- 73: Interruption zone information
- 74: Landscape explanation and guidance display start point information
- 75: Landscape explanation and guidance display end point information

### BEST MODE(S) FOR CARRYING OUT THE INVENTION

An on-train information service system, an on-train information presenting method, and a passenger train-use information displaying device according to the embodiments of the present invention are explained in detail below with reference to the drawings. The present invention is not limited by the embodiments, however.

### First Embodiment

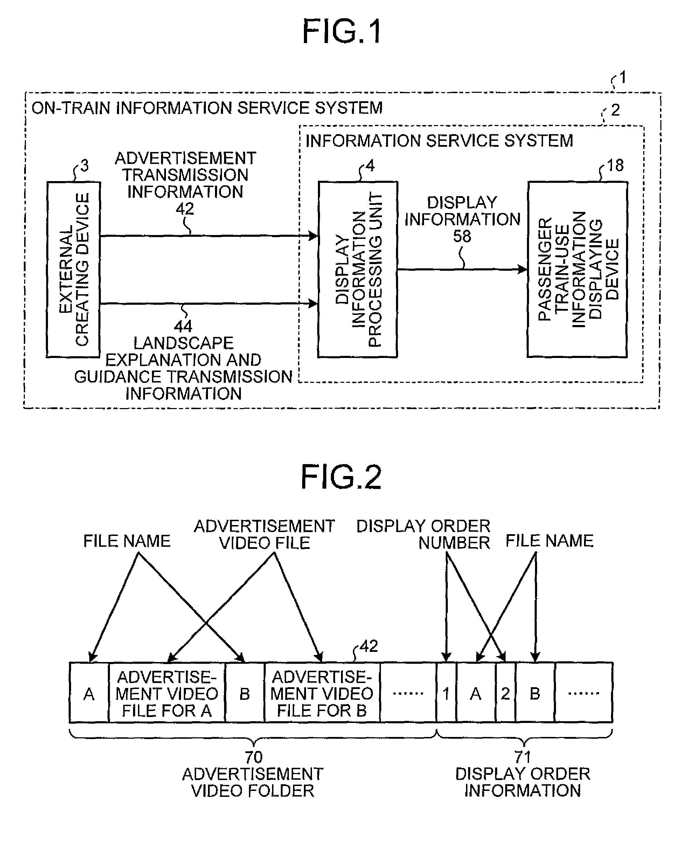

FIG. 1 is a diagram for showing an example structure of an on-train information service system 1 according to the present invention. As illustrated in FIG. 1, the on-train information service system 1 according to the first embodiment includes an external creating device 3 and an information service system 2.

The external creating device 3 is a video editing system that is provided externally to a train. The external creating device 3 creates advertisement transmission information 42 and landscape explanation and guidance transmission information 44, and outputs under a predetermined transmission system.

The transmission system for the advertisement transmission information 42 and the landscape explanation and guidance transmission information 44 may be a wireless transmission system using satellite waves or terrestrial waves, or a wired transmission system using cables such as a coaxial cable, a twisted pair cable, and an optical cable.

The information service system 2 is provided in the train, and includes a display information processing unit 4 and a passenger train-use information displaying device 18. The display information processing unit 4 includes a CPU that processes the display information, receives and stores in advance the advertisement transmission information 42 and the landscape explanation and guidance transmission information 44, both output from the external creating device 3, and outputs display information 58 that is to be presented to passengers during the operation of the train. The passenger train-use information displaying device 18 receives the display information 58 and presents image information to the passengers.

FIG. 2 is a diagram for showing an example structure of the advertisement transmission information 42. The advertisement transmission information 42 is configured to include an advertisement video folder 70 and display order information 71. The advertisement video folder 70 includes multiple advertisement video files and file names of the advertisement video files. Moreover, in the display order information 71, display order numbers that pre-designate the order of displaying the advertisement video files are associated with the file names of the advertisement video files. The content of the advertisement transmission information 42 is partially modified or updated on a regular basis.

The image information in an advertisement video file of the advertisement video folder 70 is presented to the passengers by displaying images on a regular basis in accordance with the display order information 71 under the information service system 2. Displaying images on a regular basis here means displaying them in the predetermined display order during predetermined terms of designated dates.

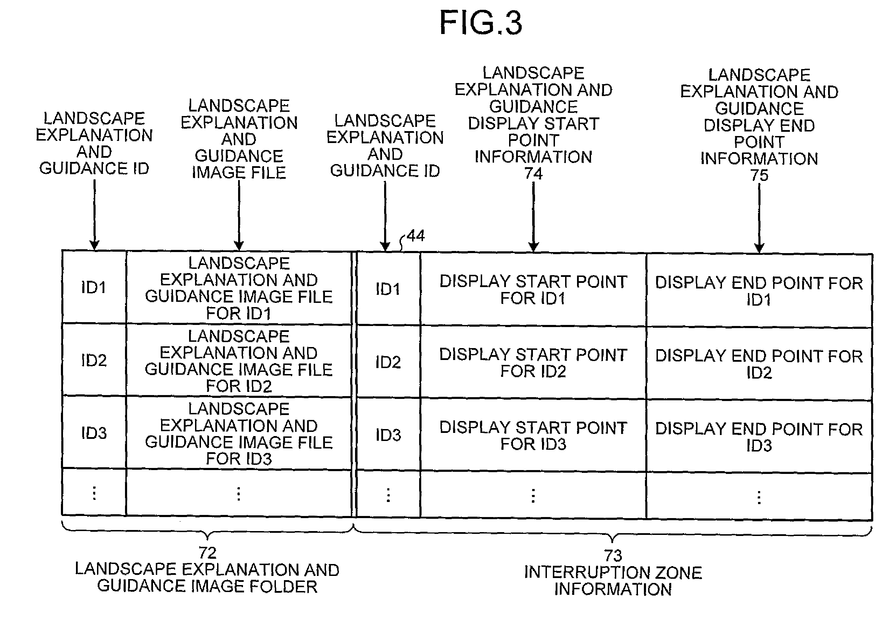

FIG. 3 is a diagram for showing an example structure of the landscape explanation and guidance transmission information 44. The landscape explanation and guidance transmission information 44 is configured to include a landscape explanation and guidance image folder 72 and interruption zone information 73. The landscape explanation and guidance image folder 72 includes multiple landscape explanation and guidance image files and landscape explanation and guidance IDs assigned individually to the landscape explanation and guidance image files. Moreover, in the interruption zone information 73, landscape explanation and guidance IDs are associated with display start point information (hereinafter, "landscape explanation and guidance display start point information 74") and display end point information (hereinafter, "landscape explanation and guidance display end point information 75") that pre-designate zones of displaying the landscape explanation and guidance image files in correspondence with the landscape explanation and guidance IDs.

The image information in the landscape explanation and guidance image files of the landscape explanation and guidance image folder 72 is presented to the passengers, by displaying images at irregular intervals under the information service system 2 in accordance with the interruption zone information 73 assigned to the landscape explanation and guidance IDs. Here, displaying images at irregular intervals means displaying them by interrupting a regular-basis program of images.

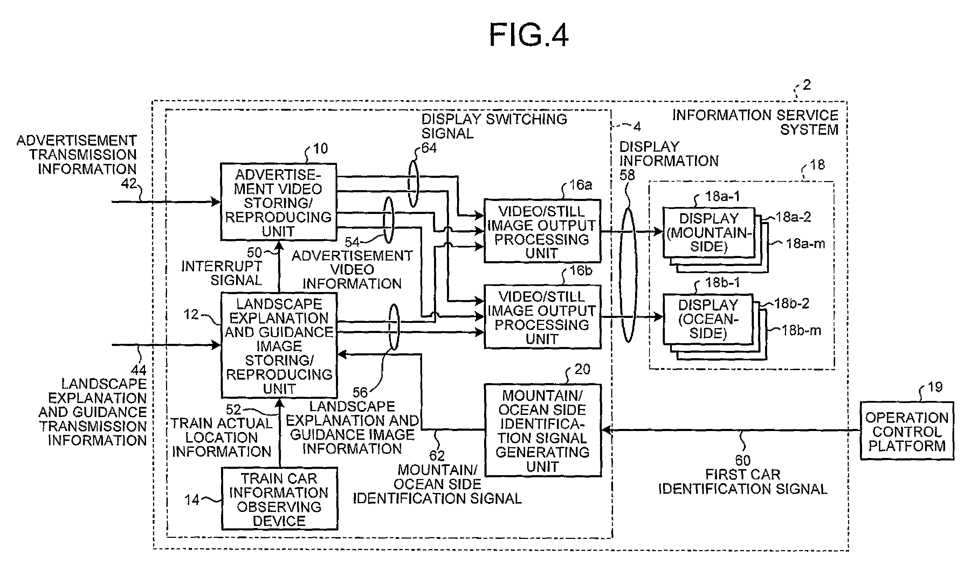

Next, the structure of the information service system 2 and the input/output signals of the structural components are explained with reference to FIG. 4. FIG. 4 is a block diagram for showing an example structure of the information service system 2 according to the first embodiment.

The information service system 2 includes a display information processing unit 4 that includes an advertisement video storing/reproducing unit 10, a landscape explanation and guidance image storing/reproducing unit 12, a train car information observing device 14, a mountain/ocean side identification signal generating unit 20, and video/still image output processing units 16a and 16b; and a passenger train-use information displaying device 18 that is formed of multiple displays 18a and 18b.

The mountain/ocean side identification signal generating unit 20 generates and outputs a mountain/ocean side identification signal 62, based on a first car identification signal 60 received from an operation control platform 19. The mountain side and the ocean side indicate views from the sides of the train car. For example, if the landscape out of the right-side window with respect to the traveling direction is a mountain view, it is the mountain side, and if the landscape from the left-side window is an ocean view, it is the ocean side. When the traveling direction is reversed, the right side of the direction is the ocean side and the left side is the mountain side. The terms mountain side and ocean side are adopted here for the sake of simplicity to indicate the two sides of the train, and therefore the mountain/ocean sides are used even for the railroad track in the mountain.

The train car information observing device 14 continuously monitors the currently traveling position of the train based on train position information indicating the mileage from the station of origin or the like, and it generates and outputs train actual location information 52 that is the positional information of the currently traveling location of the train. The train car information observing device 14 may be formed by the GPS or the like.

The landscape explanation and guidance image storing/reproducing unit 12 compares the interruption zone information 73 included in the landscape explanation and guidance transmission information 44 with the train actual location information 52, reproduces a corresponding one of the landscape explanation and guidance image files of the landscape explanation and guidance image folder 72 based on the result of the comparison and the mountain/ocean side identification signal 62, outputs landscape explanation and guidance image information 56, and also outputs an interrupt signal 50 that defines a landscape explanation and guidance start point and a landscape explanation and guidance end point. The timing of outputting the interrupt signal 50 and the timing of starting the reproduction of the landscape explanation and guidance image file will be explained later.

The advertisement video storing/reproducing unit 10 reproduces a corresponding one of the advertisement video files of the advertisement video folder 70 based on the display order information 71 included in the advertisement transmission information 42, outputs advertisement video information 54, and also outputs display switching signals 64 that instruct the start and end of the landscape explanation and guidance based on the interrupt signal 50. The timing of outputting the display switching signals 64 will be explained later.

The video/still image output processing units 16a and 16b switch between the received advertisement video information 54 and the landscape explanation and guidance image information 56 based on the display switching signals 64, and generate display information 58 based on the selected information. The video/still image output processing unit 16a and the video/still image output processing unit 16b correspond to a mountain-side seat and an ocean-side seat, respectively, of the train. In the example of FIG. 4, the video/still image output processing unit 16a corresponds to the mountain side, and the video/still image output processing unit 16b corresponds to the ocean side.

The displays 18a and 18b receive the display information 58 and display video pictures or still images. According to the first embodiment of the present invention, the displays 18a and 18b are installed over the window panes. In particular, multiple displays 18a and multiple displays 18b are installed in correspondence with the mountain-side windows and the ocean-side windows of the train. In the example of FIG. 4, the displays 18a correspond to the mountain side, and the displays 18b correspond to the ocean side.

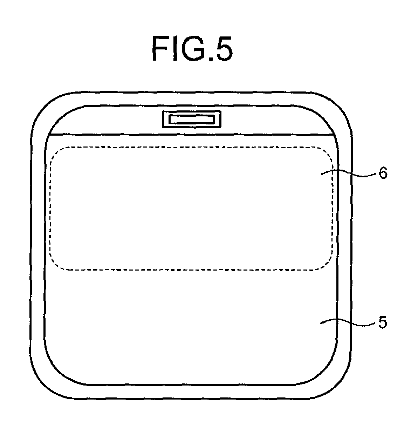

FIG. 5 is a diagram for showing an example of the displays 18a and 18b of the passenger train-use information displaying device 18 applied to a window pane 5. In the example of FIG. 5, the upper half of the window pane 5 is used as the display area 6 so that the lower half can function as a regular window pane. The displays 18a and 18b for the display area 6 may be a liquid crystal panel, an organic EL panel, or the like. Furthermore, instead of part of the window pane 5 as the display area 6, an LCD, an organic EL panel, or what is called electronic paper (suitable when the wall is curved) may be installed in the vicinity of the window such as above the window on the wall of the train car and used as the display area 6. The display information processing unit 4 including the video/still image output processing units 16a and 16b for outputting the display information 58 to the displays 18a and 18b is provided in a specific place away from the window pane on the train, for example, in the corner of the aisle, under the seat, or under the floor, and connected to the displays 18a and 18b by way of cables.

Next, the structure of the information service system 2 presenting image information to the passengers in synchronization with views is explained with reference to FIGS. 3, 4, and 6.

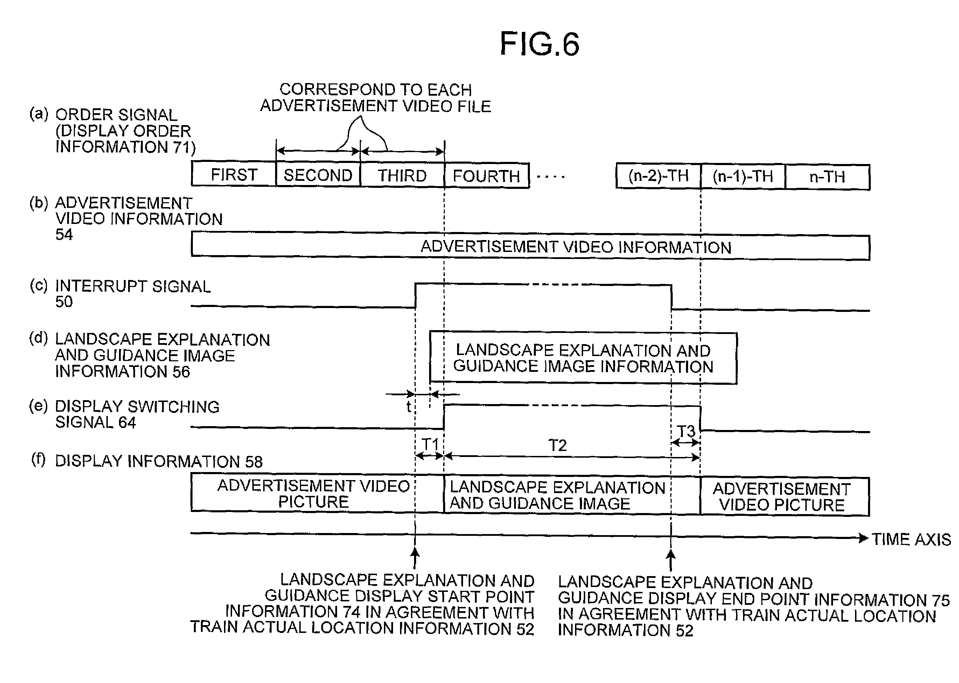

FIG. 6 is a timing chart for explaining the timings of switching between advertisement video pictures and landscape explanation and guidance images. In FIG. 6(a), display order numbers of the display order information 71 included in the advertisement transmission information 42 are indicated, where each display order number is associated with the name of an advertisement video file that is to be displayed. In FIG. 6(b), the advertisement video information 54 output by the advertisement video storing/reproducing unit 10 in correspondence with the display order numbers is indicated. In FIG. 6(c), the timing of outputting the interrupt signal 50 is indicated, while in FIG. 6(d), the landscape explanation and guidance image information 56 output by the landscape explanation and guidance image storing/reproducing unit 12 is indicated. In FIG. 6(e), the timing of outputting the display switching signal 64 is indicated, while in FIG. 6(f), the timings of switching the display information 58 output by the video/still image output processing units 16a and 16b are indicated.

When the landscape explanation and guidance display start point information 74 included in the interruption zone information 73 coincides with the train actual location information 52, the landscape explanation and guidance image storing/reproducing unit 12 starts the decoding process on a landscape explanation and guidance image file that corresponds to the landscape explanation and guidance ID, and outputs the interrupt signal 50 defining the landscape explanation and guidance start point. In the example of FIG. 6, the interrupt signal 50 is brought from a low level to a high level.

When the interrupt signal 50 defining the landscape explanation and guidance start point is received, after time t required for the landscape explanation and guidance image storing/reproducing unit 12 to perform the decoding process on the landscape explanation and guidance image file is elapsed, the advertisement video storing/reproducing unit 10 outputs the display switching signal 64 to instruct the start of the landscape explanation and guidance at a timing of switching from the advertisement video file currently being reproduced by the advertisement video storing/reproducing unit 10 itself. In the example of FIG. 6, the display switching signal 64 is brought from a low level to a high level. In FIG. 6, T1 represents a period of time between when the landscape explanation and guidance image storing/reproducing unit 12 outputs the interrupt signal 50 defining the landscape explanation and guidance start point and when the advertisement video storing/reproducing unit 10 outputs the display switching signal 64 instructing the start of the landscape explanation and guidance.

When the display switching signal 64 instructing the start of the landscape explanation and guidance is received, the video/still image output processing units 16a and 16b switch the selected information from the advertisement video information 54 to the landscape explanation and guidance image information 56.

Then, when the landscape explanation and guidance display end point information 75 included in the interruption zone information 73 coincides with the train actual location information 52, the landscape explanation and guidance image storing/reproducing unit 12 outputs the interrupt signal 50 defining the landscape explanation and guidance end point to the advertisement video storing/reproducing unit 10. In the example of FIG. 6, the interrupt signal 50 is brought from the high level to the low level.

When the interrupt signal 50 defining the landscape explanation and guidance end point is received, the advertisement video storing/reproducing unit 10 outputs the display switching signal 64 to instruct termination of the landscape explanation and guidance at the timing of switching from the advertisement video file currently being reproduced by the advertisement video storing/reproducing unit 10 itself. In the example of FIG. 6, the display switching signal 64 is brought from the high level to the low level. In FIG. 6, T3 represents the period of time between when the landscape explanation and guidance image storing/reproducing unit 12 outputs the interrupt signal 50 defining the landscape explanation and guidance end point and when the advertisement video storing/reproducing unit 10 outputs the display switching signal 64 instructing the termination of the landscape explanation and guidance.

The timing at which the landscape explanation and guidance image storing/reproducing unit 12 stops outputting the landscape explanation and guidance image information 56 can be any time after the time T3 elapses.

When the display switching signal 64 indicating the termination of the landscape explanation and guidance is received, the video/still image output processing units 16a and 16b switch the selected information from the landscape explanation and guidance image information 56 to the advertisement video information 54.

In other words, the time T2 in the drawing is the interrupt time for the landscape explanation and guidance image information 56. More specifically, when the landscape explanation and guidance display start point information 74 coincides with the train actual location information 52, the decoding process is initiated on a landscape explanation and guidance image file corresponding to the landscape explanation and guidance ID, and after the time t that is required for the decoding process of the landscape explanation and guidance image file elapses, the content of the display information 58 is switched from the advertisement video picture to a landscape explanation and guidance image at the timing of switching from the advertisement video files currently being reproduced by the advertisement video storing/reproducing unit 10. Then, when the landscape explanation and guidance display end point information 75 coincides with the train actual location information 52, the content of the display information 58 is switched from the landscape explanation and guidance image to an advertisement video picture at the timing of switching from the advertisement video file currently being reproduced by the advertisement video storing/reproducing unit 10. By such a process, a landscape explanation and guidance image can be displayed in synchronization with the landscape in a traveling zone of the train.

When the reproducing time length of the landscape explanation and guidance image file is already determined and the train is slowed down or brought to a stop due to some trouble after passing the landscape explanation and guidance display start point, the reproduction of the landscape explanation and guidance image file may be finished before it reaches the landscape explanation and guidance display termination point. In such a situation, it is preferable that the landscape explanation and guidance image file should be repeated by the landscape explanation and guidance image storing/reproducing unit 12, or that the interrupt signal 50 should be controlled before the reproduction of the landscape explanation and guidance image file is finished so that the content of the display information 58 output by the displays 18a and 18b can be switched from the landscape explanation and guidance image to an advertisement video picture.

As discussed above, with the on-train information service system according to the first embodiment of the present invention, the currently traveling location of the train is continuously monitored, the zone for displaying a landscape explanation and guidance image file is compared with a pre-designated item of the interruption zone information 73, and a landscape explanation and guidance image is displayed based on the result of the comparison. Thus, the image information can be displayed in synchronization with the landscape in the traveling zone of the train, and information related to the landscape can be presented at a suitable timing.

Furthermore, with the on-train information presenting method according to the present embodiment, when a display information process is performed to output the display information that is related to the landscape to the passenger train-use information displaying device 1 in correspondence with the landscape from the window, the train actual location information is output by detecting the currently traveling location of the train, the mountain/ocean side identification signal is output based on the first car identification signal output from the operation control platform, multiple items of landscape explanation and guidance image information and location information corresponding to the landscape explanation and guidance image information are accumulated for the operation route of the train, the train actual location information and the location information are compared, landscape explanation and guidance image information is reproduced for either mountain side or ocean side based on the mountain/ocean side identification signal when the train actual location information coincides with the location information, and the display information is generated based on the landscape explanation and guidance image information. Thus, image information (landscape explanation and guidance information) can be displayed in synchronization with the landscape in a traveling zone of the train, and the information that is related to the landscape can be presented at a suitable timing.

In addition, because part of the window pane 5 is used as the display area 6, passengers can bring the landscape and the display information into view at the same time, and thus both the landscape viewing effect and the information delivering effect can be achieved. In addition, even in configurations such as a box seat of face-to-face seating or the turned-around seats of the train car, the on-train information service system can still be suitably used.

The display area 6 should be configured in such a manner that the information delivering effect would not be impaired, or in other words, that some of the information would not be missing, even with a window pane 5 of a movable type.

Moreover, although the type of the display device of the displays 18a and 18b is not restricted, a transmissive display device adopted for the window pane 5 can realize a still higher landscape viewing effect when no information is displayed.

### Second Embodiment

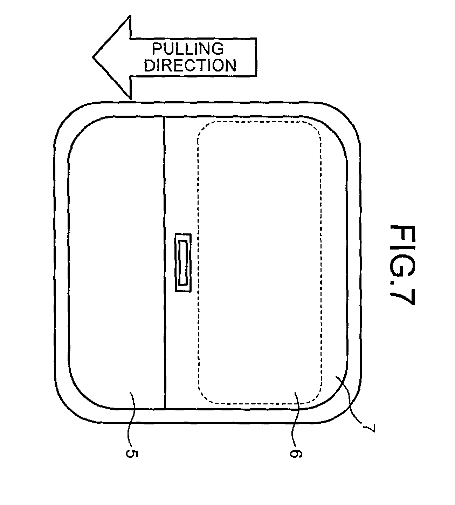

FIG. 7 is a diagram for showing an example of the displays 18a and 18b of the passenger train-use information displaying device 18 according to the first embodiment applied to a shade 7 installed on the window pane 5. According to the second embodiment, in the same manner as the first embodiment, the displays 18a and 18b applied to the display area 6 may be a liquid crystal panel, an organic EL panel, or the like.

According to the second embodiment, choices that, if a passenger wants to enjoy the landscape while using the on-train information service system, the shade 7 should be lowered until the display area 6 is exposed, and if the passenger wants to shut out the landscape or the sunlight and use the on-train information service system, the shade 7 should be entirely lowered are realized.

Furthermore, by turning the display screen off, the shade can function as an ordinary shade. In such a situation, the system may be configured in such a manner that the passenger is allowed to turn the display screen on/off.

In the example of FIG. 7, the shade 7 is pulled down from the top, but it may be configured to be pulled up from the bottom or pulled sideways.

### Third Embodiment

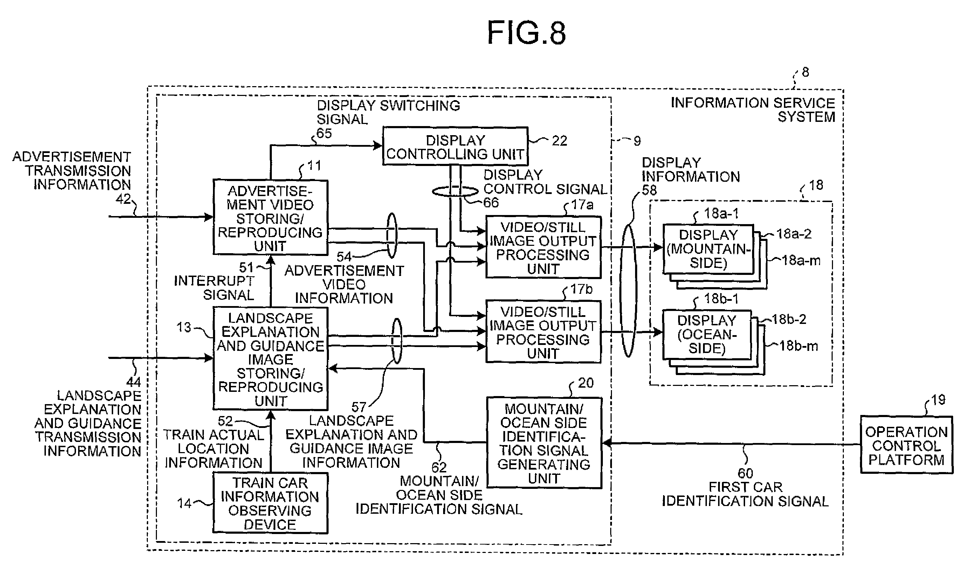

FIG. 8 is a block diagram for showing an example structure of an information service system 8 according to the third embodiment. The information service system 8 according to the third embodiment includes, as illustrated in FIG. 8, a display information processing unit 9 that includes a display controlling unit 22 that controls the image processing performed by video/still image output processing units 17a and 17b in addition to an advertisement video storing/reproducing unit 11, a landscape explanation and guidance image storing/reproducing unit 13, the train car information observing device 14, the mountain/ocean side identification signal generating unit 20, and the video/still image output processing units 17a and 17b; and the passenger train-use information displaying device 18 that is composed of displays 18a and 18b. The structural components the same as or equivalent to the ones of the first embodiment are given the same reference numerals, and the detailed explanation thereof is omitted.

The landscape explanation and guidance image storing/reproducing unit 13 outputs an interrupt signal 51 based on the interruption zone information, and also starts reproducing a landscape explanation and guidance image file corresponding to the landscape explanation and guidance ID based on the mountain/ocean side identification signal 62 so that landscape explanation and guidance image information 57 can be output in correspondence with the mountain/ocean side. The interrupt signal 51 defines a landscape explanation and guidance start point and a landscape explanation and guidance end point, and it also includes information as to whether the landscape explanation and guidance image information 57 is related to the mountain side or the ocean side.

The advertisement video storing/reproducing unit 11 reproduces an advertisement video file to output the advertisement video information 54. Furthermore, when the interrupt signal 51 is received, a display switching signal 65 is output based on the interrupt signal 51. The display switching signal 65 is output at the timing of switching from the advertisement video file in the similar manner to the first embodiment, and it also includes information as to whether the landscape explanation and guidance image information 57 is related to the mountain side or the ocean side, based on the interrupt signal 51.

The display switching signal 65 is input to the display controlling unit 22. Then, the display controlling unit 22 outputs a display control signal 66, based on the display switching signal 65, and controls the video/still image output processing units 17a and 17b.

The video/still image output processing units 17a and 17b receive the advertisement video information 54, the display control signal 66, and the landscape explanation and guidance image information 57 and generate the display information 58.

Examples of the functions of the video/still image output processing units 17a and 17b include switching between the received advertisement video information 54 and landscape explanation and guidance image information 57, double-screen displaying for an advertisement video picture and a landscape explanation and guidance image, and extracting character information from the advertisement video information 54 and the landscape explanation and guidance image information 57.

Examples of the functions of the display controlling unit 22 include double-screen controlling for the advertisement video picture and the landscape explanation and guidance image, controlling the character information included in the advertisement video information 54 and the landscape explanation and guidance image information 57 to run as a telop, and controlling the landscape explanation and guidance image information 57 when the information corresponds to either one of the mountain side or the ocean side so that the landscape explanation and guidance image is displayed only on the corresponding side.

With the above information service system according to the third embodiment, an advertisement video picture and a landscape explanation and guidance image can be displayed on two screens in a landscape explanation and guidance display zone; the content of the advertisement video information 54 can be displayed above or below the landscape explanation and guidance image or from side to side; and, when the landscape explanation and guidance image information 57 corresponds to either one of the mountain side or the ocean side, the landscape explanation and guidance image can be displayed on the corresponding side only.

In a similar manner to the first embodiment, the displays 18a and 18b adopted for the display area 6 may be a liquid crystal panel or an organic EL panel. If a transmissive display device is adopted for the displays 18a and 18b incorporated in the window pane 5, a still larger view can be ensured by controlling the video/still image output processing units 17a and 17b to display the character information extracted from the advertisement video information 54 as a telop above or below the screen over the window pane 5 or from side to side thereof in any zone except for the landscape explanation and guidance display zones.

In addition, although it is not shown in the drawings, the system may be configured in such a manner that an operation signal can be input from a passenger seat to the display controlling unit 22 so that the passenger can select or change image/video information display modes.

As discussed above, the on-train information service system according to the third embodiment of the present invention is provided with the display controlling unit 22 that controls the video/still image output processing units 17a and 17b. Hence, diversity in the method of displaying information of still images and video pictures on the displays 18a and 18b can be increased.

### Fourth Embodiment

According to the first to third embodiments, the display information processing units 4 and 9 are separated from the displays 18a and 18b, and connected to the displays 18a and 18b by way of cables. In such a structure, the display information 58 can be transmitted at a time from the mountain-side video/still image output processing units 16a and 17a and the ocean-side video/still image output processing units 16b and 17b to multiple mountain-side displays 18a-m and multiple ocean-side displays 18b-m, respectively. Thus, the entire system can be simplified.

Furthermore, for example, the mountain-side video/still image output processing units 16a and 17a and the ocean-side video/still image output processing units 16b and 17b that include a CPU may be provided individually in the displays 18a-m and 18b-m. In such a structure, the mountain-side video/still image output processing units 16a and 17a and the ocean-side video/still image output processing units 16b and 17b may be arranged in the vicinity of the displays 18a-m and 18b-m, or may be integrated with the displays 18a-m and 18b-m (into display information processing CPU-containing displays). In this manner, for example, different items of display information 58 can be transmitted to each of the displays 18a-m and 18b-m so that different video pictures and still images can be displayed on different displays.

### INDUSTRIAL APPLICABILITY

As discussed above, the on-train information service system, the on-train information presenting method, and the passenger train-use information displaying device according to the present invention can offer landscape-related information at the most suitable timing and are effective at achieving both the landscape viewing effect and the information delivering effect.

## Claims

1. An on-train information service system that is applied to a passenger train and presents image information, comprising:
a passenger train-use information displaying device that uses as a display area a part of a window pane of the passenger train or a peripheral area of the window pane; and
a display information processing unit that outputs, in correspondence with a landscape that is viewed through the window pane, display information related to the landscape.

2. The on-train information service system according to claim 1, wherein:
the display information processing unit comprises:
a train car information observing device that detects a currently traveling location of the train and outputs train actual location information;
a mountain/ocean side identification signal generating unit that outputs a mountain/ocean side identification signal based on a first car identification signal output from an operation control platform;
an image information storing/reproducing unit that stores therein a plurality of items of landscape explanation and guidance image information for zones of a train operation route and positional information in correspondence with the landscape explanation and guidance image information, compares the train actual location information with the positional information, and outputs the landscape explanation and guidance image information corresponding to a mountain side and an ocean side based on the mountain/ocean side identification signal when the train actual location information and the positional information coincide with each other; and
a video/still image output processing unit that generates the display information, based on the landscape explanation and guidance image information that is input.

3. The on-train information service system according to claim 2, wherein:
the display information processing unit further comprises a video information storing/reproducing unit that stores therein a plurality of items of video information and display order information for the video information, and outputs the video information to the video/still image output processing unit based on the display order information; and
the video/still image output processing unit preferentially generates the display information based on the image information when the image information is input, and generates the display information based on the video information when only the video information is input.

4. The on-train information service system according to claim 2 or 3, wherein:
the display information processing unit further comprises a display controlling unit that outputs a display control signal to control the video/still image output processing unit; and
the video/still image output processing unit that generates the display information based on the display control signal.

5. A passenger train-use information displaying device applied to the on-train information service system according to any one of claims 1 to 4, wherein a part of the window pane of the passenger train or the peripheral area of the window pane is used as the display area.

6. A passenger train-use information displaying device that is applied to the on-train information service system according to any one of claims 1 to 4, wherein a shade arranged on the window pane of the passenger train is used as the display area.

7. An on-train information presenting method incorporating a display device that uses a part of a window pane of a passenger train or a peripheral area of the window pane as a display area, comprising a display information processing step of outputting, in correspondence with a landscape viewed through the window pane, display information that is related to the landscape to the display device.

8. The on-train information presenting method according to claim 7, wherein:
the display information processing step comprises:
a train car information observing step of detecting a currently traveling position of the train and outputting train actual location information;
a mountain/ocean side identification signal generating step of outputting a mountain/ocean side identification signal based on a first car identification signal output from an operation control platform;
an image information storing step of storing a plurality of items of landscape explanation and guidance image information for zones of a train operation route and positional information in correspondence with the landscape explanation and guidance image information;
an image information reproducing step of comparing the train actual location information with the positional information, and reproducing the landscape explanation and guidance image information in correspondence with a mountain side and an ocean side based on the mountain/ocean side identification signal when the train actual location information and the positional information coincide with each other; and
a display information generating step of generating the display information based on the landscape explanation and guidance image information.
